(19) **Europäisches Patentamt** | **European Patent Office** | **Office européen des brevets**

(11) **EP 4 604 212 A1**

(12) **EUROPEAN PATENT APPLICATION**
published in accordance with Art. 153(4) EPC

(43) Date of publication:
**20.08.2025 Bulletin 2025/34**

(21) Application number: **23898398.5**

(22) Date of filing: **01.12.2023**

(51) International Patent Classification (IPC):
$H01M\ 4/525^{(2010.01)}$ $\qquad$ $H01M\ 4/505^{(2010.01)}$
$C01G\ 53/00^{(2025.01)}$ $\qquad$ $H01M\ 4/131^{(2010.01)}$
$H01M\ 10/052^{(2010.01)}$ $\qquad$ $H01M\ 4/02^{(2006.01)}$

(52) Cooperative Patent Classification (CPC):
**H01M 4/131; C01G 53/00; H01M 4/1391;**
**H01M 4/525; H01M 10/052;** H01M 2004/021;
H01M 2004/028; Y02E 60/10

(86) International application number:
**PCT/KR2023/019721**

(87) International publication number:
**WO 2024/117875 (06.06.2024 Gazette 2024/23)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **02.12.2022 KR 20220166990**
**02.12.2022 KR 20220166991**

(71) Applicant: **LG Energy Solution, Ltd.**
**Seoul 07335 (KR)**

(72) Inventors:
• **HWANG, Jin Tae**
**Daejeon 34122 (KR)**
• **LHO, Eun Sol**
**Daejeon 34122 (KR)**

• **OH, Su Yeon**
**Daejeon 34122 (KR)**
• **PARK, Byung Chun**
**Daejeon 34122 (KR)**
• **PARK, Sang Min**
**Daejeon 34122 (KR)**
• **LEE, Sang Wook**
**Daejeon 34122 (KR)**
• **KIM, Seul Ki**
**Daejeon 34122 (KR)**
• **KIM, Hyeong Il**
**Daejeon 34122 (KR)**

(74) Representative: **Hoffmann Eitle**
**Patent- und Rechtsanwälte PartmbB**
**Arabellastraße 30**
**81925 München (DE)**

(54) **CATHODE ACTIVE MATERIAL, METHOD FOR PREPARING SAME, CATHODE COMPRISING SAME, AND LITHIUM SECONDARY BATTERY**

(57) The positive electrode active material according to the present invention includes a single particle composed of one single nodule, a quasi-single particle, which is a composite of at most 30 nodules, or a combination thereof, wherein the positive electrode active material includes a lithium nickel-based oxide having a molar ratio of Ni of at least 60 mol% in the total moles of transition metals, and a negative skewness factor (NSF) represented by Equation 1 below is 0.20 to 0.35:

[Equation 1]

$$NSF = (D_{50} - D_{10})\ /\ I_{max}$$

In Equation 1 above, $D_{50}$ is a particle diameter at a cumulative volume of 50% in a volume cumulative particle size distribution graph of the positive electrode active material, $D_{10}$ is a particle diameter at a cumulative volume of 10% in a volume cumulative particle size distribution graph of the positive electrode active material, and $I_{max}$ is a maximum volume fraction in the volume cumulative particle size distribution graph of the positive electrode active material.

**(Cont. next page)**

FIG.4

**Description**

## TECHNICAL FIELD

This application claims the benefit of priority from Korean Patent Application Nos. 10-2022-0166990, filed on December 02, 2022, 10-2022-0166991, filed on December 02, 2022, and 10-2023-0172466, filed on December 01, 2023, the disclosures of which are incorporated herein in its entirety by reference.

The present invention relates to a positive electrode active material, a method for preparing the same, a positive electrode including the same, and a lithium secondary battery.

## BACKGROUND ART

A lithium secondary battery generally includes a positive electrode, a negative electrode, a separator, and an electrolyte, and the positive electrode and the negative electrode include an active material capable of intercalation and deintercalation of lithium ions.

Lithium cobalt oxide ($LiCoO_2$), lithium nickel oxide ($LiNiO_2$), lithium manganese oxide ($LiMnO_2$, $LiMnO_4$, or the like), a lithium iron phosphate compound ($LiFePO_4$), or the like has been used as a positive electrode active material of the lithium secondary battery. Among these, the lithium cobalt oxide has the advantage of high operating voltage and excellent capacity characteristics, but it is difficult to commercially apply the lithium cobalt oxide to large-capacity batteries due to the high price and unstable supply of cobalt as a raw material. The lithium nickel oxide has poor structural stability, and thus it is difficult to achieve sufficient lifetime characteristics. Meanwhile, the lithium manganese oxide has excellent stability, but has a limitation of poor capacity characteristics. Accordingly, lithium composite transition metal oxides including two or more transition metals have been developed to compensate for limitations of lithium transition metal oxides including Ni, Co, or Mn alone, and among these, lithium nickel cobalt manganese oxides including Ni, Co, and Mn are widely used in electric vehicle batteries.

Conventional lithium metal oxides are generally in the form of spherical secondary particles in which tens to hundreds of primary particles are aggregated. However, when applying the lithium nickel cobalt manganese oxides in the form of secondary particles in which many primary particles are aggregated as described above, there is a limitation in that particle breakage, in which the primary particles fall off in a rolling process during the preparation of a positive electrode, is easy to occur and cracks occur in the particles during charge and discharge. When the particle breakage or cracks of the positive electrode active material occur, since a contact area with the electrolyte solution increases, gas generation and degradation of the active material due to a side reaction with the electrolyte solution are increased, and as a result, there is a limitation in that lifetime characteristics are deteriorated.

In order to solve the above limitations, a technique for preparing a positive electrode active material in the form of single particles rather than secondary particles by increasing a sintering temperature during the preparation of lithium nickel cobalt manganese oxides has been proposed. The positive electrode active material in the form of single particles has a smaller contact area with the electrolyte solution than that of a conventional positive electrode active material in the form of secondary particles, and thus has less side reactions with the electrolyte and excellent particle strength such that particle breakage is less during the manufacture of an electrode. Therefore, when the positive electrode active material in the form of single particles is applied, there is an advantage that gas generation and lifetime characteristics are excellent. However, there is a limitation in that the conventional positive electrode active material in the form of single particle has a high resistance, and thus when this is applied, sufficient output performance cannot be obtained.

Meanwhile, the tap density and the pellet density can be increased only by an increase in the average particle diameter of the positive electrode active material in the form of a single particle, but when the average particle diameter is increased above a certain level, there are limitations in that the diffusion distance of lithium ions in the particles increases and the initial resistance increases.

Therefore, there is a need for a technique capable of increasing the pellet density while reducing the average particle diameter of the positive electrode active material in the form of a single particle as small as possible.

## DISCLOSURE OF THE INVENTION

## TECHNICAL PROBLEM

An aspect of the present invention provides a positive electrode active material having low initial resistance characteristics and high energy density due to a specific particle size distribution, a method for preparing the same, a positive electrode including the same, and a lithium secondary battery.

**TECHNICAL SOLUTION**

According to an aspect of the present invention, there is provided a positive electrode active material including a single particle composed of one single nodule, a quasi-single particle, which is a composite of at most 30 nodules, or a combination thereof, wherein the positive electrode active material includes a lithium nickel-based oxide having a molar ratio of Ni of at least 60 mol% in the total transition metals, and a negative skewness factor (NSF) represented by Equation 1 below is 0.20 to 0.35:

[Equation 1]

$$NSF = (D_{50} - D_{10}) / I_{max}$$

In Equation 1 above, $D_{50}$ is a particle diameter at a cumulative volume of 50% in a volume cumulative particle size distribution graph of the positive electrode active material, $D_{10}$ is a particle diameter at a cumulative volume of 10% in a volume cumulative particle size distribution graph of the positive electrode active material, and $I_{max}$ is a maximum volume fraction in the volume cumulative particle size distribution graph of the positive electrode active material.

The positive electrode active material may have a $D_{50}$ of 5.0 $\mu$m to 7.0 $\mu$m.

The lithium nickel-based oxide may be represented by Formula 1 below:

[Formula 1]          $Li_aNi_bCo_cM^1dM^2_eO_2$

In Formula 1 above, $M^1$ is Mn, Al, or a combination thereof, $M^2$ is at least one selected from the group consisting of Ba, Ca, Zr, Ti, Mg, Ta, Nb, and Mo, $1.0 \le a \le 1.5$, $0.6 \le b < 1.0$, $0 < c < 0.1$, $0 < d < 0.2$, $0 \le e \le 0.1$, and $0 < c+d+e \le 0.4$.

The positive electrode active material may have an average particle diameter of nodules of 1.0 $\mu$m to 7.0 $\mu$m.

The positive electrode active material may have a tap density of 2.40 g/cc to 2.60 g/cc.

The positive electrode active material may have a pellet density (at 9 ton) of 3.60 g/cc to 3.80 g/cc.

An initial resistance of the monocell manufactured using the positive electrode active material at an SOC of 50 may be 1.45 $\Omega$ to 1.50 $\Omega$.

According to another aspect of the present invention, there is provided a method for preparing a positive electrode active material, the method including: mixing a positive electrode active material precursor and a lithium raw material and performing primary firing; and pulverizing the primary fired product and performing secondary firing.

The positive electrode active material precursor may have $D_{50}$ of 4.0 $\mu$m to 10.0 $\mu$m.

The pulverizing may be performed by jet-mill pulverization.

The jet-mill pulverization may be performed under the conditions of 2.0 bar to 4.0 bar and 1,000 rpm to 2,500 rpm.

According to another aspect of the present invention, there are provided a positive electrode including the above-described positive electrode active material, and a lithium secondary battery including the positive electrode.

**ADVANTAGEOUS EFFECTS**

The positive electrode active material according to the present invention has NSF satisfying a specific range, so that small particles fill spaces between relatively large particles and a tap density and a pellet density increase, thereby enabling a lithium secondary battery including the positive electrode active material to achieve a high energy density.

In addition, the positive electrode active material according to the present invention has the NSF satisfying a specific range, thereby reducing the diffusion distance of lithium ions in the particle, and thus the lithium secondary battery including the positive electrode active material may achieve a low initial resistance.

**BRIEF DESCRIPTION OF THE DRAWINGS**

FIG. 1 shows graphs showing volume cumulative particle size distribution of positive electrode active materials prepared according to Examples 1 to 4 of the present invention and Comparative Examples 1 to 4.

FIG. 2 is a graph showing tap densities depending on $D_{50}$ of the positive electrode active materials prepared according to Examples 1 to 4 of the present invention and Comparative Examples 1 to 4.

FIG. 3 is a graph showing pellet densities depending on $D_{50}$ of the positive electrode active materials prepared according to Examples 1 to 4 of the present invention and Comparative Examples 1 to 4.

FIG. 4 is a graph showing pellet densities depending on NSF values of the positive electrode active materials prepared according to Examples 1 to 4 of the present invention and Comparative Examples 1 to 4.

FIG. 5 is a graph showing initial resistances depending on $D_{50}$ of a lithium secondary battery including the positive electrode active materials prepared according to Examples 1 to 4 of the present invention and Comparative Examples 1 to 4.

## MODE FOR CARRYING OUT THE INVENTION

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

As used herein, the term "single particle" refers to a particle composed of a single nodule. As used herein, the term "quasi-single particle" refers to a particle that is a composite particle formed of at most 30 nodules.

As used herein, the term "nodule" refers to a particle unit body constituting single particles and quasi-single particles, and the nodule may be a single crystal which lacks a crystalline grain boundary, or may be a polycrystal having no grain boundary in appearance when observed in the view at a magnification of 5,000 to 20,000 using a scanning electron microscope (SEM). The average particle diameter of the nodules may be determined with an arithmetic mean value of the particle diameters of each nodule measured using a scanning electron microscope (SEM).

As used herein, the term "secondary particle" refers to a particle formed by aggregation of tens to hundreds of primary particles. More specifically, the secondary particle is an aggregate of at least 40 primary particles.

The expression "particle" used herein may include any one or all among a single particle, a quasi-single particle, a primary particle, a nodule, and a secondary particle.

As used herein, the term "$D_{50}$" refers to a particle size based on 50% of the volume cumulative particle size distribution of the positive electrode active material. The $D_{50}$ may be measured using a laser diffraction method. For example, powder of positive electrode active materials may be dispersed in a dispersion medium, then introduced into a commercially available laser diffraction particle size measuring apparatus (e.g., Microtrac MT 3000), irradiated with an ultrasonic wave of about 28 kHz at a 60-W output. Then, after a volume cumulative particle size distribution graph may be obtained, a particle size corresponding to 50% of the volume cumulative amount may be determined to measure the average particle diameter $D_{50}$.

Hereinafter, the present invention will be described in more detail.

## Positive Electrode Active Material

The positive electrode active material according to the present invention includes a single particle composed of one single nodule, a quasi-single particle which is a composite of at most 30 nodules, or a combination thereof.

Since the lithium nickel-based oxides in the form of single particles and/or quasi-single particles have higher particle strength than the conventional lithium nickel-based oxide in the form of secondary particles in which tens to hundreds of primary particles are aggregated, there is less particle breakage during rolling.

In addition, the lithium nickel-based oxide in a single-particle or quasi-single-particle form according to the present invention has less number of sub-components (*i.e.*, nodules) constituting the particles, thereby reducing changes due to volume expansion and contraction of the primary particles during charging and discharging, and thus significantly reducing cracks within the particles.

In particular, the inventors of the present invention have found that when a positive electrode active material having a negative skewness factor (NSF) satisfying a certain range, the NSF being represented by Equation 1 below is applied, particle breakage may be minimized in the electrode manufacturing process to reduce gas generation, a change in crystal structure may be minimized during the charging and discharging, a diffusion distance of lithium ions in the particles may be reduced to achieve low initial resistance characteristics, and the energy density may be improved by maximizing a tap density and a pellet density.

$$| \quad [\text{Equation 1}]$$

$$NSF = (D_{50} - D_{10}) / I_{max}$$

In Equation 1 above, $D_{50}$ is a particle diameter at a cumulative volume of 50% in a volume cumulative particle size distribution graph of the positive electrode active material, $D_{10}$ is a particle diameter at a cumulative volume of 10% in a volume cumulative particle size distribution graph of the positive electrode active material, and $I_{max}$ is a maximum volume fraction in the volume cumulative particle size distribution graph of the positive electrode active material.

The positive electrode active material according to the present invention may include a lithium nickel-based oxide having a molar ratio of Ni of at least 60 mol%, at least 70 mol%, or at least 80 mol% in the total transition metals.

The positive electrode active material according to the present invention may have an NSF value of 0.20 to 0.35, 0.21 to 0.35, or 0.21 to 0.34. According to the study of the present inventors, when the NSF value is less than 0.20 or greater than 0.35, the tap density and pellet density are found to decrease.

When the NSF value satisfies the above range, the tap density and pellet density increase as the small particles fill the spaces between the relatively large particles. When the NSF value is less than 0.20, there are insufficient small particles to fill the spaces between the large particles, and when the NSF value is greater than 0.35, the small particles remain after the small particles fill the spaces between the large particles, resulting in a reduction in the pellet density. Accordingly, even if $D_{50}$ is at the same level, the tap density and pellet density may be maximized when the NSF value is optimized.

The positive electrode active material according to the present invention may have $D_{50}$ of 5.0 $\mu$m to 7.0 $\mu$m, 5.5 $\mu$m to 6.5 $\mu$m, or 5.6 $\mu$m to 6.2 $\mu$m. When the $D_{50}$ of the positive electrode active material according to the present invention satisfies the above range, the low initial resistance characteristics and high energy density may be achieved. When the NSF value is the same, the pellet density increases as the $D_{50}$ of the positive electrode active material increases. When the $D_{50}$ of the positive electrode active material is less than 5.0 $\mu$m, it may be difficult to achieve a relatively high pellet density even though an optimal level of NSF is achieved, and when the $D_{50}$ is greater than 7.0 $\mu$m, the lithium mobility of the positive electrode active material decreases and thus the initial resistance of the lithium secondary battery including the positive electrode active material may increase.

Meanwhile, the positive electrode active material according to the present invention may include a lithium nickel-based oxide, and specifically, may include a lithium nickel-based oxide having a composition as shown in Formula 1 below.

$$[\text{Formula 1}] \qquad Li_aNi_bCo_cM^1dM^2{}_eO_2$$

In Formula 1 above, $M^1$ is Mn, Al, or a combination thereof, and preferably, Mn or a combination of Mn and Al, and $M^2$ is at least one selected from the group consisting of Ba, Ca, Zr, Ti, Mg, Ta, Nb, and Mo. The $M^2$ element is not necessarily included, but when included in an appropriate amount, the $M^2$ element may serve to promote particle growth during the sintering or improve the crystal structure stability.

a above denotes a molar ratio of lithium in the lithium nickel-based oxide, and may satisfy $1.0 \leq a \leq 1.5$, $1.1 \leq a \leq 1.4$, or $1.2 \leq a \leq 1.3$. When the molar ratio of lithium satisfies the above range, the stable layered crystal structure may be formed.

b above denotes a molar ratio of nickel among all metals excluding lithium in the lithium nickel-based oxide, and may satisfy $0.6 \leq b < 1.0$, $0.8 \leq b < 1.0$, or $0.82 \leq b < 1.0$. When the molar ratio of nickel satisfies the above range, the capacity characteristics are excellent, and particularly, when the molar ratio of nickel is 0.8 or more, better capacity characteristics may be achieved.

c above denotes a molar ratio of cobalt among all metals excluding lithium in the lithium nickel-based oxide, and may satisfy $0 < c < 0.1$, $0 < c < 0.08$, or $0 < c < 0.06$.

d above denotes a molar ratio of the $M^1$ among all metals excluding lithium in the lithium nickel-based oxide, and may satisfy $0 < d < 0.2$, $0 < d < 0.18$, or $0 < d < 0.15$.

e above denotes a molar ratio of the $M^2$ element among all metals excluding lithium in the lithium nickel-based oxide, and may satisfy $0 \leq e \leq 0.1$, $0 \leq e \leq 0.08$, or $0 \leq e \leq 0.06$.

The positive electrode active material according to the present invention may have an average particle diameter of nodules of 1.0 $\mu$m to 7.0 $\mu$m, 2.0 $\mu$m to 6.0 $\mu$m, or 3.0 $\mu$m to 5.0 $\mu$m. When the average particle diameter of the nodules of the positive electrode active material according to the present invention satisfies the above range, high energy density and low initial resistance characteristics may be achieved. When the average particle diameter of the nodules of the positive electrode active material according to the present invention is less than 1.0 $\mu$m, the total specific surface area of the positive electrode active material is increased so that the side reaction of the electrolyte solution may be increased, and when the average particle diameter of the nodules is greater than 7.0 $\mu$m, the lithium mobility of the positive electrode active material is decreased, and thus the output characteristics of the battery may be deteriorated.

The positive electrode active material according to the present invention may have a tap density of 2.40 g/cc to 2.60 g/cc, 2.42 g/cc to 2.56 g/cc, or 2.43 g/cc to 2.54 g/cc. When the tap density of the positive electrode active material according to the present invention satisfies the above range, a high energy density may be achieved.

The positive electrode active material according to the present invention may have a pellet density (at 9 ton) of 3.60 g/cc to 3.80 g/cc, 3.61 g/cc to 3.78 g/cc, or 3.62 g/cc to 3.75 g/cc. When the pellet density of the positive electrode active material according to the present invention satisfies the above range, a high energy density may be achieved.

Meanwhile, an initial resistance of the monocell manufactured using the positive electrode active material at an SOC of 50 may be 1.45 $\Omega$ to 1.50 $\Omega$, preferably 1.47 $\Omega$ to 1.50 Q, and more preferably 1.48 $\Omega$ to 1.49 $\Omega$.

## Method for **Preparing Positive Electrode Active Material**

Next, a method for preparing a positive electrode active material of the present invention will be described.

A method for preparing a positive electrode active material according to the present invention includes the steps of: (A) mixing a positive electrode active material precursor and a lithium raw material and performing primary firing; and (B) pulverizing the primary fired product and performing secondary firing.

In addition, the prepared positive electrode active material includes a single particle composed of one single nodule, a quasi-single particle, which is a composite of at most 30 nodules, or a combination thereof, wherein the positive electrode active material includes a lithium nickel-based oxide having a molar ratio of Ni of at least 60 mol% in the total transition metals, and a negative skewness factor (NSF) represented by Equation 1 below is 0.20 to 0.35:

$$| \quad \text{[Equation 1]}$$

$$NSF = (D_{50} - D_{10}) / I_{max}$$

In Equation 1 above, $D_{50}$ is a particle diameter at a cumulative volume of 50% in a volume cumulative particle size distribution graph of the positive electrode active material, $D_{10}$ is a particle diameter at a cumulative volume of 10% in a volume cumulative particle size distribution graph of the positive electrode active material, and $I_{max}$ is a maximum volume fraction in the volume cumulative particle size distribution graph of the positive electrode active material.

The same description above is applied to Equation 1 above, and duplicated description will be omitted.

Hereinafter, each step of the method for preparing a positive electrode active material will be described in detail.

First, a positive electrode active material precursor and a lithium raw material are mixed and then first fired (step (A)).

In this case, the positive electrode active material precursor may be prepared by purchasing a precursor such as a commercially available nickel cobalt manganese-based hydroxide or the like, or by a precursor preparation method known in the art such as a co-precipitation method.

For example, a transition metal-containing solution containing cations of nickel (Ni), cobalt (Co), and $M^1$ may be prepared, and then an ammonium cation-containing complexing agent and a basic aqueous solution may be added to the transition metal-containing solution to perform co-precipitation reaction, thereby preparing a positive electrode active material precursor.

The transition metal-containing solution may contain a nickel-containing raw material, a cobalt-containing raw material, and an $M^1$-containing raw material, and the $M^1$-containing raw material may be a manganese-containing raw material and/or an aluminum-containing raw material.

The nickel-containing raw material may include, for example, nickel-containing acetates, nitrates, sulfates, halides, sulfides, hydroxides, oxides, or oxyhydroxides, and may specifically include $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a fatty acid nickel salt, a nickel halide, or a combination thereof, but the present invention is not limited thereto.

The cobalt-containing raw material may include cobalt-containing acetates, nitrates, sulfates, halides, sulfides, hydroxides, oxides, or oxyhydroxides, and may specifically include $Co(OH)_2$, $CoOOH$, $Co(OCOCH_3)_2 \cdot 4H_2O$, $Co(NO_3)_2 \cdot 6H_2O$, $CoSO_4$, $Co(SO_4)_2 \cdot 7H_2O$, or a combination thereof, but the present invention is not limited thereto.

The manganese-containing raw material may include, for example, manganese-containing acetates, nitrates, sulfates, halides, sulfides, hydroxides, oxides, oxyhydroxides, or a combination thereof, and may specifically include a manganese oxide such as $Mn_2O_3$, $MnO_2$, and $Mn_3O_4$; a manganese salt such as $MnCO_3$, $Mn(NO_3)_2$, $MnSO_4$, manganese acetate, manganese dicarboxylate, manganese citrate, and a fatty acid manganese salt; a manganese oxyhydroxide, manganese chloride, or a combination thereof, but the present invention is not limited thereto.

The aluminum-containing raw material may be, for example, $Al_2O_3$, $Al(OH)_3$, $Al(NO_3)_3$, $Al_2(SO_4)_3$, $(HO)_2AlCH_3CO_2$, $HOAl(CH_3CO_2)_2$, $Al(CH_3CO_2)_3$, an aluminum halide, or a combination thereof.

The transition metal-containing solution may be prepared by adding the nickel-containing raw material, the cobalt-containing raw material, and the $M^1$-containing raw material to a solvent, specifically water, or a mixed solvent of an organic solvent (e.g., alcohol, etc.) which may be uniformly mixed with the water, or may be prepared by mixing an aqueous solution of the nickel-containing raw material, an aqueous solution of the cobalt-containing raw material, and the $M^1$-containing raw material.

The ammonium cation-containing complexing agent may include, for example, $NH_4OH$, $(NH_4)_2SO_4$, $NH_4NO_3$, $NH_4Cl$, $CH_3COONH_4$, $NH_4CO_3$, or a combination thereof, but the present invention is not limited thereto. Meanwhile, the ammonium cation-containing complexing agent may be used in the form of an aqueous solution, and, in this case, water or a mixture of water and an organic solvent (specifically, alcohol etc.), which may be uniformly mixed with the water, may be used as a solvent.

The basic compound may include a hydroxide of alkali metal or alkaline earth metal, such as NaOH, KOH, or $Ca(OH)_2$, a hydrate thereof, or a combination thereof. The basic compound may also be used in the form of an aqueous solution, and, in this case, water or a mixture of water and an organic solvent (specifically, alcohol etc.), which may be uniformly mixed with the water, may be used as a solvent.

The basic compound is added to adjust a pH of a reaction solution, wherein the basic compound may be added in an amount such that the pH of the metal solution is 8 to 12.

The co-precipitation reaction may be performed in a temperature range of 35 °C to 80 °C in an inert atmosphere such as nitrogen or argon.

The positive electrode active material precursor particles of a nickel-cobalt-$M^1$ hydroxide are formed by the above-described process, and are precipitated in the reaction solution. A positive electrode active material precursor having a nickel (Ni) content of at least 60 mol% in the total metal content may be prepared by controlling concentrations of a nickel-containing raw material, a cobalt-containing raw material, and an $M^1$-containing raw material. The precipitated positive electrode active material precursor particles may be separated according to a conventional method and dried to prepare a positive electrode active material precursor.

Meanwhile, the positive electrode active material precursor as prepared above may have a $D_{50}$ of 4.0 μm to 10.0 μm, preferably 5.0 μm to 9.0 μm, and more preferably 6.0 μm to 8.0 μm. When the $D_{50}$ of the positive electrode active material precursor is less than 4.0 μm, the possibility that the $D_{50}$ of the positive electrode active material is smaller than the appropriate range increases, and when the $D_{50}$ of the positive electrode active material precursor is greater than 10.0 μm, the specific surface area (BET) decreases, and thus reactivity when mixed with the lithium raw material decreases, thereby reducing the degree of completion of the structure of the positive electrode active material.

Thereafter, the positive electrode active material precursor and the lithium raw material may be mixed.

As the lithium raw material, lithium-containing sulfates, nitrates, acetates, carbonates, oxalates, citrates, halides, hydroxides, or oxyhydroxides may be used, and these materials are not particularly limited as long as they may be dissolved in water. Specifically, the lithium raw material may include $Li_2CO_3$, $LiNO_3$, $LiNO_2$, LiOH, LiOH · $H_2O$, LiH, LiF, LiCl, LiBr, LiI, $CH_3COOLi$, $Li_2O$, $Li_2SO_4$, $CH_3COOLi$, $Li_3C_6H_5O_7$, or the like, and any one thereof or a mixture of two or more thereof may be used.

The positive active material precursor and the lithium raw material may be mixed in a molar ratio of, for example, about 1:1, about 1:1.05, about 1:1.10, about 1:1.15, or about 1:1.20, but the present invention is not limited thereto.

Thereafter, the mixture may be primarily fired.

The primary firing may be conducted in an air or oxygen atmosphere.

The primary firing may be performed at a temperature of 700 °C to 1,000 °C, 800 °C to 900 °C , or 825 °C to 875 °C.

The primary firing may be performed for 6 hours to 18 hours, 8 hours to 16 hours, or 10 hours to 14 hours.

Next, the primary fired product is pulverized and secondarily fired (step (B)).

In this case, the pulverizing may be performed by, for example, jet-mill pulverization. The jet-mill pulverization may be performed in a pressure range of 2.0 bar to 4.0 bar, 2.2 bar to 3.8 bar, or 2.4 bar to 3.5 bar.

In addition, the jet-mill pulverization may be performed at a speed range of 1,000 rpm to 2,500 rpm, 1,200 rpm to 2,400 rpm, or 1,300 rpm to 2,300 rpm. The positive electrode active material prepared by performing in the pulverization speed range may have an NSF value of 0.20 to 0.35, 0.21 to 0.35, or 0.21 to 0.34. Accordingly, the prepared positive electrode active material may achieve the low initial resistance characteristics and high energy density.

Through the jet-mill pulverization, the degree of completion of the structure of the surface exposed by particle breakage may be increased.

The secondary firing may be performed at a temperature of 500 °C to 1,000 °C, 600 °C to 900 °C, or 700 °C to 800 °C.

The secondary firing may be performed for 6 hours to 18 hours, 8 hours to 16 hours, or 10 hours to 14 hours.

Through the recrystallization reaction generated through the secondary firing, the degree of completion of the structure of positive electrode active material may be increased compared to the positive electrode active material after the primary firing.

After the jet-mill pulverization, the secondary firing may be performed to recrystallize the surface exposed by the particle breakage and remove the fine powder in the process of recrystallizing.

Meanwhile, in the case of preparing an $M^2$ metal-containing lithium composite transition metal oxide, $M^2$ metal-containing raw materials may be additionally mixed during the co-precipitation reaction or in the firing step. In this case, the $M^2$ metal-containing raw material may be an acetate, carbonate, nitrate, sulfate, halide, sulfide, or oxide of the $M^2$ metal.


**Positive Electrode**


The positive electrode according to the present invention includes the positive electrode active material of the present invention as described above. Specifically, the positive electrode includes a positive electrode current collector and a positive electrode active material layer formed on the positive electrode current collector, and the positive electrode active material layer includes the positive electrode active material according to the present invention. Since the positive electrode active material is described above, detailed descriptions thereof will be omitted, and the remaining configurations will be only described in detail below.

The positive electrode current collector may include a metal having high conductivity, and is not particularly limited as long as the positive electrode active material layer easily adheres thereto and there is no reactivity in the voltage range of the battery. For example, stainless steel, aluminum, nickel, titanium, heat-treated carbon, or aluminum or stainless steel that is surface-treated with one of carbon, nickel, titanium, silver, or the like may be used as the positive electrode current collector. Also, the positive electrode current collector may typically have a thickness of 3 $\mu$m to 500 $\mu$m, and microscopic irregularities may be formed on the surface of the current collector to improve the adhesion of the positive electrode active material. The positive electrode current collector, for example, may be used in various shapes such as a film, a sheet, a foil, a net, a porous body, a foam body, and a non-woven fabric body.

The positive electrode active material layer may optionally include a conductive agent and a binder together with the positive electrode active material as necessary.

In this case, the positive electrode active material may be included in a content of 80 wt% to 99 wt%, more specifically, 90 wt% to 98 wt% with respect to the total weight of the positive electrode active material layer.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metals such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.01 wt% to 10 wt%, preferably 0.1 wt% to 9 wt%, and more preferably 0.1 wt% to 5 wt% with respect to the total weight of the positive electrode active material layer.

The binder serves to improve binding between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with Li, Na, or Ca, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% with respect to the total weight of the positive electrode active material layer.

The positive electrode may be prepared according to a typical method for preparing a positive electrode except that the above-described positive electrode active material is used. Specifically, a positive electrode slurry composition, which is prepared by dissolving or dispersing optionally the binder, the conductive agent, and the dispersing agent, if necessary, as well as the positive electrode active material in a solvent, is coated on the positive electrode collector, and the positive electrode may then be prepared by drying and rolling the coated positive electrode collector.

The solvent may be a solvent normally used in the art. The solvent may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersing agent in consideration of a coating thickness of the slurry and manufacturing yield, and may allow to have a viscosity that may provide excellent thickness uniformity during the subsequent coating for the preparation of the positive electrode.

Also, as another method, the positive electrode may be prepared by casting the positive electrode slurry composition on a separate support and then laminating a film separated from the support on the positive electrode collector.

## Lithium Secondary Battery

Next, a lithium secondary battery according to the present invention will be described.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container which accommodates an electrode assembly of the positive electrode, the negative electrode, and the separator, and a sealing member which seals the battery container.

In the lithium secondary battery, the negative electrode includes a negative electrode collector and a negative electrode active material layer disposed on the negative electrode collector.

The negative electrode current collector is not particularly limited as long as it has high conductivity without causing adverse chemical changes in the battery, and, for example, copper, stainless steel, aluminum, nickel, titanium, heat-treated carbon, copper or stainless steel that is surface-treated with one of carbon, nickel, titanium, silver, or the like, and an aluminum-cadmium alloy may be used. Also, the negative electrode current collector may typically have a thickness of 3 μm to 500 μm, and as in the case of the positive electrode current collector, microscopic irregularities may be formed on the surface of the negative electrode current collector to enhance the adhesion of a negative electrode active material. For example, the negative electrode current collector may be used in various shapes such as a film, a sheet, a foil, a net, a porous body, a foam body, and a non-woven fabric body.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as $SiO\beta$ ($0 < \beta < 2$), $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature heat-treated carbon such as petroleum or coal tar pitch derived cokes.

The negative electrode active material may be included in an amount of 80 wt% to 99 wt%, 82 wt% to 99 wt%, or 84 wt% to 99 wt% with respect to the total weight of the negative electrode active material layer.

The binder is a component that assists in the binding between the conductive agent, the active material, and the current collector, wherein the binder is commonly added in an amount of 0.1 wt% to 10 wt% based on the total weight of the negative electrode active material layer. Examples of the binder may include a polyvinylidene fluoride (PVDF), a polyvinyl alcohol, carboxymethylcellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, a nitrile-butadiene rubber, a fluoro rubber, various copolymers thereof, and the like.

The conductive agent is a component for further improving the conductivity of the negative electrode active material, and may be included in an amount of 1 wt% to 30 wt%, 1 wt% to 20 wt%, or 1 wt% to 10 wt% with respect to the total weight of the negative electrode active material layer. The conductive agent is not particularly limited as long as it has conductivity without causing adverse chemical changes in the battery. For example, graphite such as natural graphite or artificial graphite; carbon black such as acetylene black, Ketjen black, channel black, furnace black, lamp black, and thermal black; conductive fibers such as carbon fibers or metal fibers; fluorocarbons; metal powder such as aluminum powder or nickel powder; a conductive whisker such as a zinc oxide whisker or a potassium titanate whisker; a conductive metal oxide such as a titanium oxide; or a conductive material such as a polyphenylene derivative; and the like may be used.

The negative electrode active material layer may be prepared by coating a negative electrode slurry composition, which is prepared by dissolving or dispersing optionally the binder and the conductive agent as well as the negative electrode active material in a solvent, on the negative electrode current collector and drying the coated negative electrode current collector, or may be prepared by casting the negative electrode slurry composition on a separate support and then laminating a film separated from the support on the negative electrode current collector.

Meanwhile, in the lithium secondary battery, the separator separates the negative electrode and the positive electrode and provides a movement path of lithium ions, and any separator may be used as the separator without particular limitation as long as it is typically used as a separator in a lithium secondary battery, and particularly, a separator having high moisture-retention ability for an electrolyte as well as low resistance to the transfer of electrolyte ions may be prepared. Specifically, a porous polymer film, for example, a porous polymer film prepared from a polyolefin-based polymer, such as an ethylene homopolymer, a propylene homopolymer, an ethylene/butene copolymer, an ethylene/-hexene copolymer, and an ethylene/methacrylate copolymer, or a laminated structure having two or more layers thereof may be used. Also, a typical porous non-woven fabric, for example, a non-woven fabric formed of high melting point glass fibers or polyethylene terephthalate fibers may be used. Furthermore, a coated separator including a ceramic component or a polymer material may be used in order to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, anions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. It is preferable to use the lithium salt in a concentration range of 0.1 M to 4.0 M, preferably, 0.5 M to 3.0 M, and more preferably, 1.0 M to 2.0 M. When the concentration of the lithium salt is included within the above range, the electrolyte may have suitable conductivity and viscosity, thereby exhibiting excellent performance, and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 10.0 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

## Examples and Comparative Example

### Example 1

A positive electrode active material precursor, $Ni_{0.90}Co_{0.05}Mn_{0.05}(OH)_2$, having a $D_{50}$ of 7.0 $\mu$m and a lithium raw material, LiOH, were mixed and then primarily fired at 850 °C for 12 hours.

Thereafter, the primary fired product was pulverized with a jet-mill for 1 hour under the conditions of 2.5 bar and 1,400 rpm, and then secondarily fired at 750 °C for 12 hours to prepare a positive electrode active material, Li-$Ni_{0.90}Co_{0.05}Mn_{0.05}(OH)_2$.

### Example 2

A positive electrode active material was prepared in the same manner as in Example 1, except that a positive electrode active material precursor having a $D_{50}$ of 8.0 $\mu$m was used and the jet-mill pulverization was performed for 1 hour under the conditions of 2.5 bar and 1,800 rpm.

### Example 3

A positive electrode active material was prepared in the same manner as in Example 1, except that a positive electrode active material precursor having a $D_{50}$ of 9.0 $\mu$m was used and the jet-mill pulverization was performed for 1 hour under the conditions of 2.5 bar and 2,400 rpm.

### Example 4

A positive electrode active material was prepared in the same manner as in Example 1, except that a positive electrode active material precursor having a $D_{50}$ of 9.0 $\mu$m was used and jet-mill pulverization was performed for 1 hour under the conditions of 3.0 bar and 2,400 rpm.

### Comparative Example 1

A positive electrode active material was prepared in the same manner as in Example 1, except that a positive electrode active material precursor having a $D_{50}$ of 3.5 $\mu$m was used and the jet-mill pulverization was performed for 1 hour under the conditions of 2.5 bar and 800 rpm.

### Comparative Example 2

A positive electrode active material was prepared in the same manner as in Example 1, except that a positive electrode active material precursor having a $D_{50}$ of 5.5 $\mu$m was used and the jet-mill pulverization was performed for 1 hour under the conditions of 2.5 bar and 800 rpm.

### Comparative Example 3

A positive electrode active material was prepared in the same manner as in Example 1, except that a positive electrode active material precursor having a $D_{50}$ of 7.0 $\mu$m was used and the jet-mill pulverization was performed for 1 hour under the conditions of 2.5 bar and 800 rpm.

### Comparative Example 4

A positive electrode active material was prepared in the same manner as in Example 1, except that a positive electrode active material precursor having a $D_{50}$ of 9.0 $\mu$m was used and the jet-mill pulverization was performed for 1 hour under the conditions of 2.5 bar and 2,800 rpm.

### Experimental Example 1: Particle Size Distribution of Positive Electrode Active Material

The positive electrode active material (0.005 g) prepared in each of Examples 1 to 4 and Comparative Examples 1 to 4 was dispersed in $H_2O$ as a dispersion medium, and then introduced into a commercially available laser diffraction particle size measuring apparatus (e.g., Microtrac MT 3000), irradiated with an ultrasonic wave of about 28 kHz at a 60-W output to obtain a volume cumulative particle size distribution graph of each positive electrode active material, and $D_{50}$, $D_{10}$, $I_{max}$ and the NSF values of Equation 1 below were calculated using the graph.

$$[\text{Equation 1}]$$

$$NSF = (D_{50} - D_{10}) / I_{max}$$

In Equation 1 above, $D_{50}$ is a particle diameter at a cumulative volume of 50% in a volume cumulative particle size distribution graph of the positive electrode active material, $D_{10}$ is a particle diameter at a cumulative volume of 10% in a volume cumulative particle size distribution graph of the positive electrode active material, and $I_{max}$ is a maximum volume fraction in the volume cumulative particle size distribution graph of the positive electrode active material.

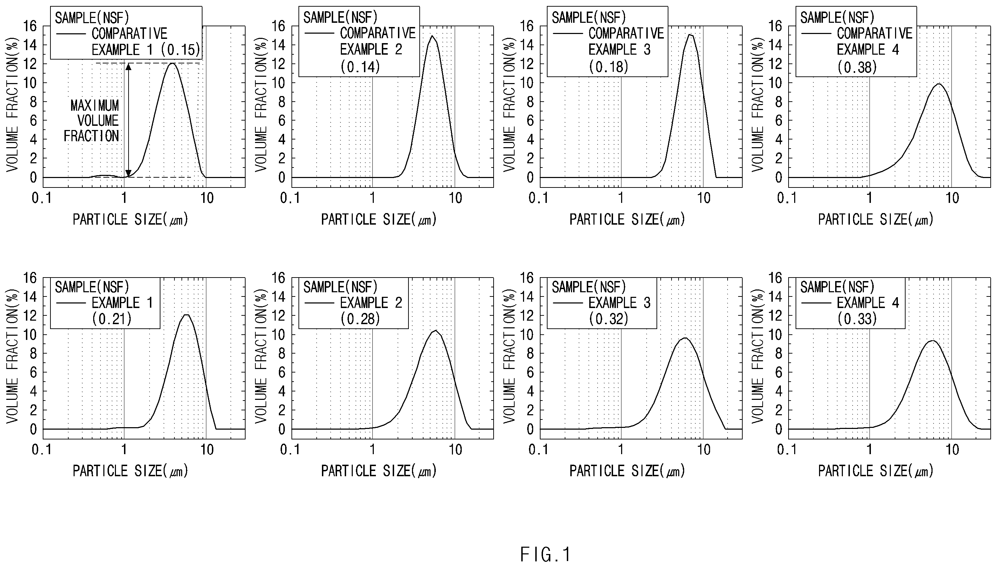

The volume cumulative particle size distribution graphs of the respective positive electrode active materials are shown in FIG. 1, and $D_{50}$, $D_{10}$, $I_{max}$, and NSF values of Equation 1 are shown in Table 1 below.

[Table 1]

|  | $D_{50}$ [μm] | $D_{10}$ [μm] | $I_{max}$ | NSF |
|---|---|---|---|---|
| Example 1 | 5.62 | 3.10 | 12.00 | 0.21 |
| Example 2 | 5.81 | 2.92 | 10.40 | 0.28 |
| Example 3 | 6.01 | 2.95 | 9.65 | 0.32 |
| Example 4 | 5.90 | 2.82 | 9.35 | 0.33 |
| Comparative Example 1 | 3.96 | 2.17 | 11.90 | 0.15 |
| Comparative Example 2 | 5.64 | 3.60 | 14.80 | 0.14 |
| Comparative Example 3 | 7.41 | 4.79 | 14.50 | 0.18 |
| Comparative Example 4 | 6.80 | 3.11 | 9.79 | 0.38 |

**Experimental Example 2: Tap Density and Pellet Density of Positive Electrode Active Material**

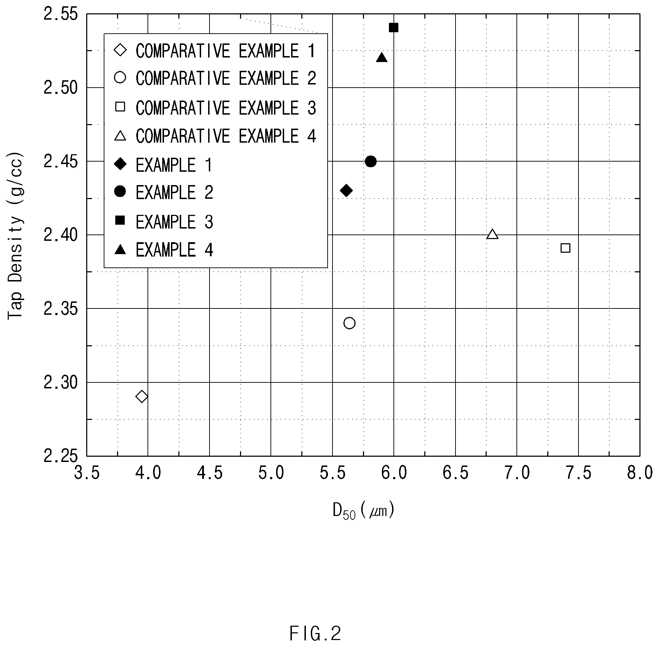

A tap density of the positive electrode active material prepared in each of Examples 1 to 4 and Comparative Examples 1 to 4 was measured using a tap density tester (Micromeritics GeoPyc 1365). Specifically, a 45-cc container was filled with 10 g of the positive electrode active material prepared in each of Examples 1 to 4 and Comparative Examples 1 to 4, and then was vibrated until a force of 108 N was applied horizontally to measure a tap density. The measurement results are shown in Table 2 below, and the tap densities depending on $D_{50}$ are shown in FIG. 2.

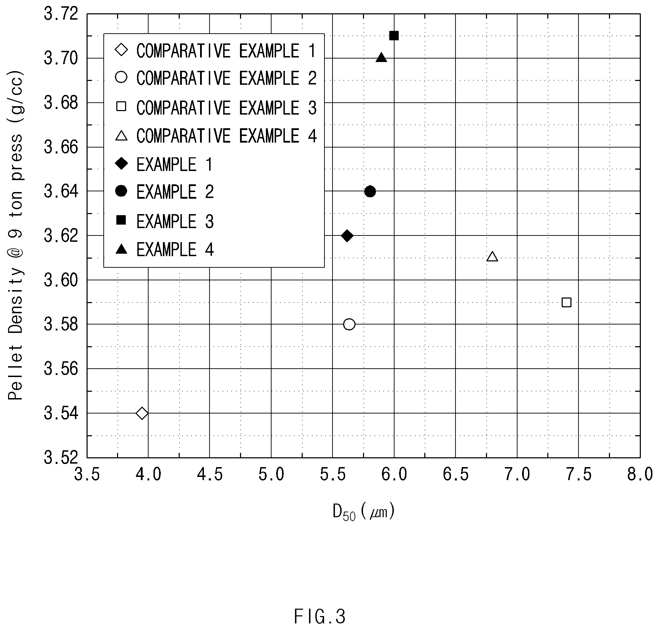

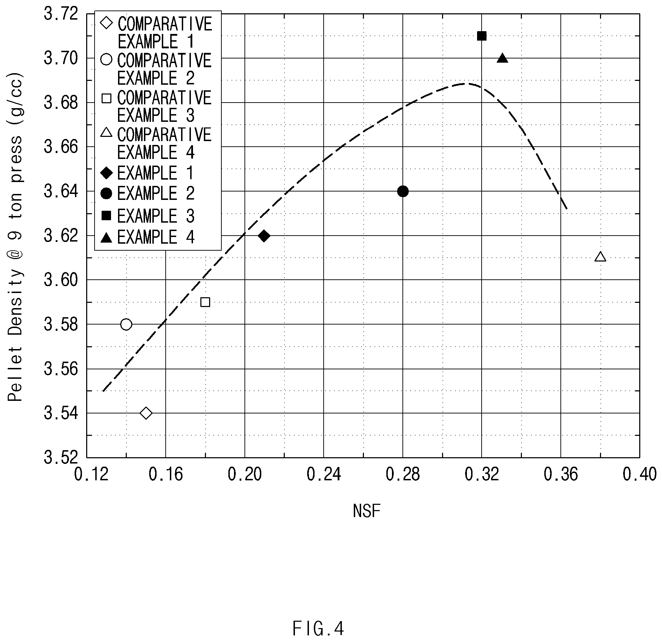

A pellet density of the positive electrode active material prepared in each of Examples 1 to 4 and Comparative Examples 1 to 4 was measured using a density meter (Carver Pellet Press). Specifically, 5 g of the positive electrode active material prepared in each of Examples 1 to 4 and Comparative Examples 1 to 4 was subdivided and filled a cylindrical holder having a diameter of 13 mm without any gaps, and then the pellet density was measured by applying a pressure of 9 ton. The measurement results are shown in Table 2 below, the pellet densities depending on $D_{50}$ are shown in FIG. 3, and the pellet densities depending on the NSF values are shown in FIG. 4.

[Table 2]

|  | Tap density [g/cc] | Pellet density [g/cc] |
|---|---|---|
| Example 1 | 2.43 | 3.62 |
| Example 2 | 2.45 | 3.64 |
| Example 3 | 2.54 | 3.71 |
| Example 4 | 2.52 | 3.70 |
| Comparative Example 1 | 2.29 | 3.54 |
| Comparative Example 2 | 2.34 | 3.58 |
| Comparative Example 3 | 2.39 | 3.59 |
| Comparative Example 4 | 2.40 | 3.61 |

Referring to Table 2 above, it was found that the positive electrode active materials of Examples 1 to 4 have higher tap density and higher pellet density than the positive electrode active materials of Comparative Examples 1 to 4. Referring to FIGS. 2 and 3, even when the positive electrode active materials have the same $D_{50}$ value, it can be seen that when the NSF value satisfies the numerical range according to the examples of the present invention, the positive electrode active materials have a high tap density and a high pellet density. In this case, it is believed that the tap density and the pellet density increase as the small particles fill the spaces between the relatively large particles. On the other hand, it is believed that in the case of Comparative Examples 1 to 3 in which the NSF value is less than 0.20, small particles to fill the spaces between large particles are insufficient, and in the case of Comparative Example 4 in which the NSF value is greater than 0.35, small particles remain even after the small particles fill the spaces between the large particles, thereby causing a decrease in the pellet density.

**Experimental Example 3: Initial Resistance of Lithium Secondary Battery**

<Manufacture of Lithium Secondary Battery>

A positive electrode slurry was prepared by mixing the positive electrode active material prepared in each of Examples 1 to 4 and Comparative Examples 1 to 4, a conductive agent (Carbon black, Denka), and a PVDF binder in a weight ratio of 96:1:3 in N-methylpyrrolidone. The positive electrode slurry was coated on one surface of an aluminum current collector, dried at 130 °C, and then rolled to prepare a positive electrode.

A negative electrode active material, a binder, and a conductive agent were mixed in a weight ratio of 97:1.5:1.5 in N-methylpyrrolidone to prepare a negative electrode mixture. Specifically, artificial graphite was used as the negative electrode active material, carboxymethyl cellulose (CMC) was used as the binder, and carbon black was used as the conductive agent. The prepared negative electrode mixture was applied onto one surface of a copper current collector, dried at 110 °C, and then rolled to prepare a negative electrode.

An electrode assembly was prepared by interposing a separator between the positive electrode and the negative electrode, and then the electrode assembly was placed inside a battery case, and then an electrolyte solution was injected into the case to manufacture a battery cell. The electrolyte solution was prepared by dissolving 1 M $LiPF_6$ in a mixed organic solvent in which ethylene carbonate (EC), dimethyl carbonate (DMC), and ethyl methyl carbonate (EMC) was mixed in a volume ratio of 1:1:1, and adding 5 wt% of vinylene carbonate (VC) thereto.

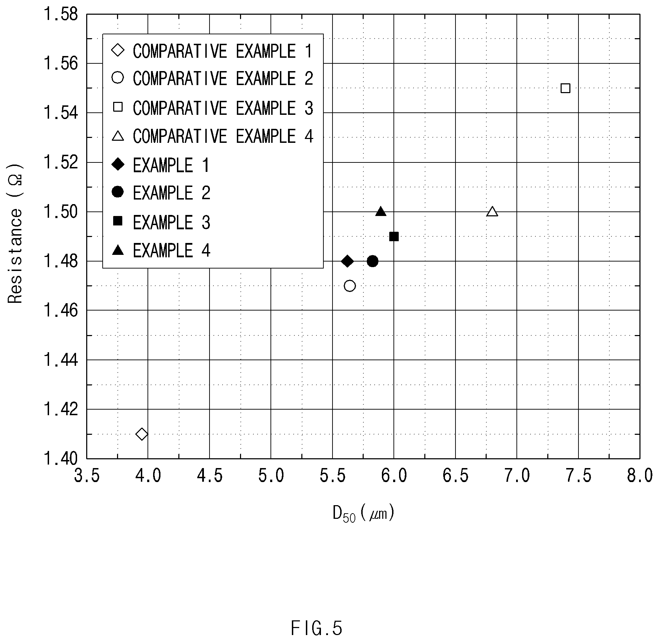

The initial resistance value of the manufactured battery cell was measured through a voltage change when 2.5 C of current was applied at an SOC of 50, at which the battery is half-charged, for 10 seconds. The measurement results are presented in Table 3 and FIG. 5 below:

[Table 3]

|  | Initial resistance (SOC.50%) |
|---|---|
| Example 1 | 1.48 |
| Example 2 | 1.48 |
| Example 3 | 1.49 |
| Example 4 | 1.49 |
| Comparative Example 1 | 1.41 |
| Comparative Example 2 | 1.47 |
| Comparative Example 3 | 1.55 |
| Comparative Example 4 | 1.50 |

Referring to Table 3 above and FIG. 5, it was found that the positive electrode active material of Comparative Example 3 having the NSF value of 0.18 and $D_{50}$ greater than 7.0 $\mu$m has a higher initial resistance value than the positive electrode active materials of Examples 1 to 4. It is believed that the diffusion distance of lithium ions in the particles of the positive electrode active material increases, resulting in a decrease in lithium mobility, thereby increasing the initial resistance of the lithium secondary battery including the positive electrode active material. As described above with reference to Experimental Examples 2 to 3, it can be seen that the positive electrode active material of the present invention has low initial resistance characteristics while increasing the energy density by maximizing the tap density and the pellet density.

**Claims**

1. A positive electrode active material comprising a single particle composed of one single nodule, a quasi-single particle, which is a composite of at most 30 nodules, or a combination thereof,

   wherein the positive electrode active material comprises a lithium nickel-based oxide having a molar ratio of Ni of at least 60 mol% in the total transition metals, and
   a negative skewness factor (NSF) represented by Equation 1 below is 0.20 to 0.35:

[Equation 1]

$$NSF = (D_{50} - D_{10}) / I_{max}$$

wherein, in Equation 1 above, $D_{50}$ is a particle diameter at a cumulative volume of 50% in a volume cumulative particle size distribution graph of the positive electrode active material, $D_{10}$ is a particle diameter at a cumulative volume of 10% in a volume cumulative particle size distribution graph of the positive electrode active material, and $I_{max}$ is a maximum volume fraction in the volume cumulative particle size distribution graph of the positive electrode active material.

2. The positive electrode active material of claim 1, wherein the positive electrode active material has a $D_{50}$ of 5.0 $\mu$m to 7.0 $\mu$m.

3. The positive electrode active material of claim 1, wherein the lithium nickel-based oxide is represented by Formula 1 below:

[Formula 1]     $Li_aNi_bCo_cM^1dM^2_eO_2$

wherein, in Formula 1 above, $M^1$ is Mn, Al, or a combination thereof, $M^2$ is at least one selected from the group consisting of Ba, Ca, Zr, Ti, Mg, Ta, Nb, and Mo, $1.0 \leq a \leq 1.5$, $0.6 \leq b < 1.0$, $0 < c < 0.1$, $0 < d < 0.2$, $0 \leq e \leq 0.1$, and $0 < c+d+e \leq 0.4$.

4. The positive electrode active material of claim 1, wherein the positive electrode active material has an average particle diameter of nodules of 1.0 $\mu$m to 7.0 $\mu$m.

5. The positive electrode active material of claim 1, wherein the positive electrode active material has a tap density of 2.40 g/cc to 2.60 g/cc.

6. The positive electrode active material of claim 1, wherein the positive electrode active material has a pellet density (at 9 ton) of 3.60 g/cc to 3.80 g/cc.

7. The positive electrode active material of claim 1, wherein an initial resistance of the monocell manufactured using the positive electrode active material at an SOC of 50 is 1.45 $\Omega$ to 1.50 $\Omega$.

8. A method for preparing a positive electrode active material according to any one of claims 1 to 7, the method comprising:

(A) mixing a positive electrode active material precursor and a lithium raw material and performing primary firing; and
(B) pulverizing the primary fired product and performing secondary firing.

9. The method of claim 8, wherein the positive electrode active material precursor has a $D_{50}$ of 4.0 $\mu$m to 10.0 $\mu$m.

10. The method of claim 8, wherein the pulverizing is performed by jet-mill pulverization.

11. The method of claim 10, wherein the jet-mill pulverization is performed under the conditions of 2.0 bar to 4.0 bar and 1,000 rpm to 2,500 rpm.

12. A positive electrode comprising the positive electrode active material of any one of claims 1 to 7.

13. A lithium secondary battery comprising the positive electrode of claim 12.

FIG.1

FIG.2

FIG.3

FIG.4

FIG.5

## INTERNATIONAL SEARCH REPORT

| International application No. |
|---|
| **PCT/KR2023/019721** |

| A. | CLASSIFICATION OF SUBJECT MATTER |
|---|---|

**H01M 4/525**(2010.01)i; **H01M 4/505**(2010.01)i; **C01G 53/00**(2006.01)i; **H01M 4/131**(2010.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/525(2010.01); H01M 10/052(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 양극 활물질(cathode active material), 단입자(single particle), 음성 왜도 계수(Negative Skewness Factor, NSF), 밀도(density), 입경(diameter), 소성(calcination), 분쇄(milling)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2126898 B1 (SM LAB CO., LTD.) 25 June 2020 (2020-06-25)<br>See claims 1, 6, 8, 14, 16 and 17; paragraphs [0044]-[0046], [0062], [0083], [0143] and [0165]-[0168]; and table 2. | 1-13 |
| A | JP 2018-501602 A (LG CHEM, LTD.) 18 January 2018 (2018-01-18)<br>See entire document. | 1-13 |
| A | KR 10-2019-0095927 A (SUMITOMO CHEMICAL CO., LTD. et al.) 16 August 2019 (2019-08-16)<br>See entire document. | 1-13 |
| A | KR 10-2020-0100475 A (SM LAB CO., LTD.) 26 August 2020 (2020-08-26)<br>See entire document. | 1-13 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 March 2024** | **11 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/019721** |

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2021-0124181 A (RESEARCH INSTITUTE OF INDUSTRIAL SCIENCE & TECHNOLOGY) 14 October 2021 (2021-10-14) See entire document. | 1-13 |

Form PCT/ISA/210 (second sheet) (July 2022)

## INTERNATIONAL SEARCH REPORT
### Information on patent family members

International application No.

**PCT/KR2023/019721**

| Patent document cited in search report | | | Publication date (day/month/year) | Patent family member(s) | | | Publication date (day/month/year) |
|---|---|---|---|---|---|---|---|
| KR | 10-2126898 | B1 | 25 June 2020 | CN | 114762149 | A | 15 July 2022 |
| | | | | EP | 4071859 | A1 | 12 October 2022 |
| | | | | EP | 4071859 | A4 | 17 January 2024 |
| | | | | JP | 2023-505185 | A | 08 February 2023 |
| | | | | JP | 7402566 | B2 | 21 December 2023 |
| | | | | KR | 10-2021-0070893 | A | 15 June 2021 |
| | | | | KR | 10-2350597 | B1 | 18 January 2022 |
| | | | | US | 2023-0053984 | A1 | 23 February 2023 |
| | | | | WO | 2021-112323 | A1 | 10 June 2021 |
| JP | 2018-501602 | A | 18 January 2018 | CN | 107046815 | A | 15 August 2017 |
| | | | | CN | 107046815 | B | 30 June 2020 |
| | | | | EP | 3203560 | A1 | 09 August 2017 |
| | | | | EP | 3203560 | A4 | 08 November 2017 |
| | | | | EP | 3203560 | B1 | 05 February 2020 |
| | | | | JP | 6345797 | B2 | 20 June 2018 |
| | | | | KR | 10-1761524 | B1 | 25 July 2017 |
| | | | | US | 10128508 | B2 | 13 November 2018 |
| | | | | US | 2017-0365858 | A1 | 21 December 2017 |
| | | | | WO | 2017-099272 | A1 | 15 June 2017 |
| KR | 10-2019-0095927 | A | 16 August 2019 | CN | 110192297 | A | 30 August 2019 |
| | | | | CN | 110192297 | B | 02 December 2022 |
| | | | | EP | 3561923 | A1 | 30 October 2019 |
| | | | | EP | 3561923 | A4 | 19 August 2020 |
| | | | | EP | 3561923 | B1 | 23 June 2021 |
| | | | | JP | 2018-106892 | A | 05 July 2018 |
| | | | | JP | 6412094 | B2 | 24 October 2018 |
| | | | | KR | 10-2023-0008238 | A | 13 January 2023 |
| | | | | US | 11532814 | B2 | 20 December 2022 |
| | | | | US | 2019-0334170 | A1 | 31 October 2019 |
| | | | | WO | 2018-123817 | A1 | 05 July 2018 |
| KR | 10-2020-0100475 | A | 26 August 2020 | CN | 113424337 | A | 21 September 2021 |
| | | | | EP | 3879607 | A1 | 15 September 2021 |
| | | | | EP | 3879607 | A4 | 31 August 2022 |
| | | | | EP | 3879607 | B1 | 18 October 2023 |
| | | | | EP | 3879607 | C0 | 18 October 2023 |
| | | | | JP | 2022-523183 | A | 21 April 2022 |
| | | | | JP | 7262851 | B2 | 24 April 2023 |
| | | | | KR | 10-2195187 | B1 | 28 December 2020 |
| | | | | US | 11456453 | B2 | 27 September 2022 |
| | | | | US | 2021-0218018 | A1 | 15 July 2021 |
| | | | | WO | 2020-171367 | A1 | 27 August 2020 |
| KR | 10-2021-0124181 | A | 14 October 2021 | CN | 113169330 | A | 23 July 2021 |
| | | | | DE | 112019005846 | T5 | 02 September 2021 |
| | | | | JP | 2022-507171 | A | 18 January 2022 |
| | | | | JP | 7166452 | B2 | 07 November 2022 |
| | | | | KR | 10-2526171 | B1 | 26 April 2023 |
| | | | | US | 2022-0029157 | A1 | 27 January 2022 |
| | | | | WO | 2020-106126 | A2 | 28 May 2020 |
| | | | | WO | 2020-106126 | A3 | 09 July 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220166990
- KR 1020220166991
- KR 1020230172466